# EUROPÄISCHE PATENTSCHRIFT

(11) **EP 0 954 431 B1**
(45) Veröffentlichungstag und Bekanntmachung des Hinweises auf die Patenterteilung: **09.04.2003**
(21) Anmeldenummer: 98907820.9
(22) Anmeldetag: 14.01.1998
(51) Int. Cl.: B29C 49/00

(54) **VORRICHTUNG ZUM HERSTELLEN VON QUERRIPPEN-ROHREN**
DEVICE FOR PRODUCING CROSS-FINNED PIPES
DISPOSITIF POUR PRODUIRE DES TUBES A NERVURES TRANSVERSALES

(30) Priorität: 25.01.1997 DE 19702638
(43) Veröffentlichungstag der Anmeldung: 10.11.1999
(73) Patentinhaber: UNICOR GmbH Rahn Plastmaschinen, D-97437 Hassfurt (DE)
(72) Erfinder: NEUBAUER, Gerhard, D-97486 Königsberg (DE)
(74) Vertreter: LOUIS, PÖHLAU, LOHRENTZ & SEGETH
(86) Internationale Anmeldenummer: DE9800129
(87) Internationale Veröffentlichungsnummer: WO98032584

(56) Entgegenhaltungen:
- EP-A- 0 065 729
- EP-A- 0 621 120
- DE-A- 2 065 048
- US-A- 4 439 130
- US-A- 4 718 844
- US-A- 5 545 369

## Beschreibung

Die Erfindung betrifft eine Vorrichtung zum Herstellen von Querrippen-Rohren gemäß dem Oberbegriff des Anspruches 1.

Eine derartige Vorrichtung ist aus der EP 0 621 120 A bekannt. Bei dieser bekannten Vorrichtung sind die Vakuumleiste und die Kühlmediumleiste an einer Seite, d.h. an einer Fläche der Formbackenhälften, miteinander kombiniert, so daß ein entsprechender konstruktiver Aufwand für die Abdichtung zwischen der Vakuumleiste und der Kühlmittelleiste gegeben ist, um zu verhindern, daß Kühlmedium in die Vakuumleiste eindringt.

Aus der EP 0 065 729 ist eine Vorrichtung zum Herstellen von Querrippen-Rohren bekannt, wobei die Vakuumkanäle und die Kühlkanäle auf der gleichen Seite der Formbackenhälften ausmünden, so daß nicht zuverlässig vermeidbar ist, daß Kühlflüssigkeit in die Vakuumkanäle gelangt. Das kann sich auf die Betriebszuverlässigkeit auswirken.

Eine Vorrichtung zum Herstellen von Querrippen-Rohren mit Formbackenhälften, die mit Vakuumkanälen ausgebildet sind, die mit dem entlang einer Formstrecke gebildeten Formkanal der Formbackenhälften strömungstechnisch verbunden sind, ist beispielsweise auch aus der DE 27 53 297 A1 oder aus der US 3 981 663 bekannt.

Aus der DE 25 37 184 A1 ist eine Vorrichtung zum Herstellen von Querrippen-Rohren bekannt, welche Formbackenhälften aufweist, die jeweils mit einem Kühlkanal ausgebildet sind. Die Kühlkanäle der Formbackenhälften sind mit Kühlleitungsschleifen strömungstechnisch verbunden, um eine gewünschte Kühlung der Formbackenhälften zu erzielen.

Die DE 195 17 023 C1 der Anmelderin offenbart eine Vorrichtung zum Herstellen von Querrippen-Rohren, welche Formbacken aufweist, die entlang einer gemeinsamen Formstrecke mit ihren Stirnflächen eng aneinander anliegen. Bei dieser bekanten Vorrichtung bilden die Formbacken entlang der gemeinsamen Formstrecke mindestens zwei voneinander beabstandete Formkanäle. Jeder Formkanal kommunizieret mit zugehörigen Vakuumkanälen, wobei die Vakuumkanäle benachbarter Formkanäle in jedem Formbacken miteinander durch Verbindungskanäle strömungstechnisch verbunden sind. Ventileinrichtungen dienen dort dazu, den jeweils gewünschten Formkanal mit eine Vakuumquelle strömungstechnisch zu verbinden.

Der Erfindung liegt die Aufgabe zugrunde, eine Vorrichtung der eingangs genannten Art zu schaffen, mit der bei einer konstruktiv relativ einfachen Ausbildung Abdichtungsprobleme zwischen der Kühlmediumleiste und der Vakuumleiste zuverlässig vermieden werden.

Diese Aufgabe wird erfindungsgemäß durch die Merkmale des Patentanspruches 1 gelöst.

Die erfindungsgemäße Vorrichtung weist den Vorteil auf, daß mit konstruktiv einfachen Mitteln zuverlässig verhindert wird, daß Kühlmedium ungewollt in die Vakuumkanäle gelangt. Ein weiterer erheblicher Vorteil der erfindungsgemäßen Vorrichtung besteht darin, daß eine sichere und zuverlässige strömungstechnische Verbindung zwischen der Vakuumquelle und den Vakuumkanälen der jeweiligen, an der Formstrecke befindlichen Formbackenhälften durch die ortsfeste Vakuumleiste und außerdem eine sichere und zuverlässige fluidische Verbindung der Kühlkanäle der zuletzt genannten Formbackenhälften durch die ortsfeste Kühlmediumleiste gewährleistet wird, wobei die Formbackenhälften mit einer großen Vorschubgeschwindigkeit bewegbar sind, woraus eine entsprechend hohe Produktivität der erfindungsgemäßen Vorrichtung resultiert.

Dadurch, daß erfindungsgemäß die erste und die zweite Fläche sich gegenüberliegen und zueinander parallel vorgesehen sind, ergibt sich der Vorteil, daß der Vakuumanschluß und der Kühlmediumanschluß sich nicht gegenseitig behindern oder beeinträchtigen, sondern problemlos wunschgemäß anordenbar sind. Vorzugsweise sind die erste und die zweite Fläche der Formbackenhälften horizontal und ihre Stirnflächen lotrecht orientiert.

Das Führungs- und Gleitelement und das Trägerelement jeder Formbackenhälfte der erfindungsgemäßen Vorrichtung bestehen aus dem gleichen Material. Bei diesem Material handelt es sich vorzugsweise um ein abriebfestes Material, z.B. um Edelstahl.

Die Formbackenhälften bestehen vorzugsweise aus einem Material, das im Vergleich zum Material für die Führungs- und Gleitelemente einen hohen Wärmeleitungskoeffizienten aufweist. Die Formbackenhälften bestehen z.B. aus Aluminium. Eine derartige Ausbildung resultiert nicht nur in einem relativ geringen Gesamtgewicht der einzelnen Formbackenhälften, so daß die Antriebsleistung zum Vorschub der Formbackenhälften entsprechend reduziert sein kann, sondern außerdem auch in einer optimalen Kühlung der Formbackenhälften, was sich ebenfalls auf die Betriebszuverlässigkeit und die Produktivität der erfindungsgemäßen Vorricht4ung sowie auf die Qualität der mit der erfindungsgemäßen Vorrichtung hergestellten Querrippen-Rohre entsprechend positiv auswirkt.

Um die erfindungsgemäße Vorrichtung mit Formbackenhälften zur Realisierung von Querrippen-Rohren mit unterschiedlichen Abmessungen benutzen zu können, ist es zweckmäßig, wenn die Formbackenhälften mittels Schnellspanneinrichtungen mit den zugehörigen Trägerelementen verbindbar sind. Mit Hilfe derartiger Schnellspannvorrichtungen ist es zeitsparend möglich, die jeweils gewünschten Formbackenhälften eines Satzes von Formbacken für Querrippen-Rohre bestimmter Abmessungen an den Trägerelementen der erfindungsgemäßen Vorrichtung zu fixieren, um danach mit der solchermaßen ausgerüsteten Vorrichtung die gewünschten Querrippen-Rohre herstellen zu können.

Um oftmals nicht zu vermeidende Abmessungstoleranzen der Formbackenhälften sowie insbesondere auch Wärmeausdehnungen der Formbackenhälften auszugleichen, ist es bevorzugt, wenn bei der erfindungsgemäßen Vorrichtung die Vakuumleiste an einem ortsfesten Vakuumkopf elastisch nachgiebig angebracht ist.

Die Kühlmediumleiste weist vorzugsweise einen zentralen Kühlmedium-Umlaufabschnitt und zwei seitlich daran angrenzende ölgeschmierte Führungsabschnitte auf. Dabei bestehen die ölgeschmierten Führungsabschnitte zweckmäßigerweise aus einem Metall, dessen Abriebfestigkeit größer ist als die des zentralen Kühlmedium-Umlaufabschnittes, und der zentrale längliche Kühlmedium-Umlaufabschnitt besteht zweckmäßigerweise aus einer Gleitmetallegierung. Bei dem Metall für die Führungsabschnitt kann es sich um Edelstahl und bei der Gleitmetallegierung um Bronze handeln.

Die Erfindung wird an Hand der nachfolgenden Beschreibung eines in der Zeichnung dargestellten Ausführungsbeispieles der erfindungsgemäßen Vorrichtung zum Herstellen von Querrippen-Rohren näher erläutert. Es zeigen:
- Fig. 1: teilweise geschnitten wesentliche Teile der Vorrichtung im Bereich der Formstrecke der Formbackenhälften in einer Vorderansicht,
- Fig. 2: geschnitten zwei Formbackenhälften an der gemeinsamen Formstrecke in Kombination mit den zugehörigen Führungs- und Gleitelementen an der Oberseite der beiden Formbackenhälften,
- Fig. 3: eine Ansicht der beiden Formbackenhälften in Blickrichtung des Pfeiles III in Fig.. 2, d.h. in Blickrichtung von oben,
- Fig. 4: eine Ansicht der linken Formbackenhälfte gemäß Fig.2 in Blickrichtung der Pfeile IV-IV in Fig. 2,
- Fig. 5: eine Ansicht der linken Formbackenhälfte gemäß Fig.2 in Blickrichtung des Pfeiles V, d.h. in Blickrichtung von unten, und
- Fig. 6: eine stirnseitige Ansicht einer Formbackenhälfte entlang der Pfeile VI-VI in Fig. 3.

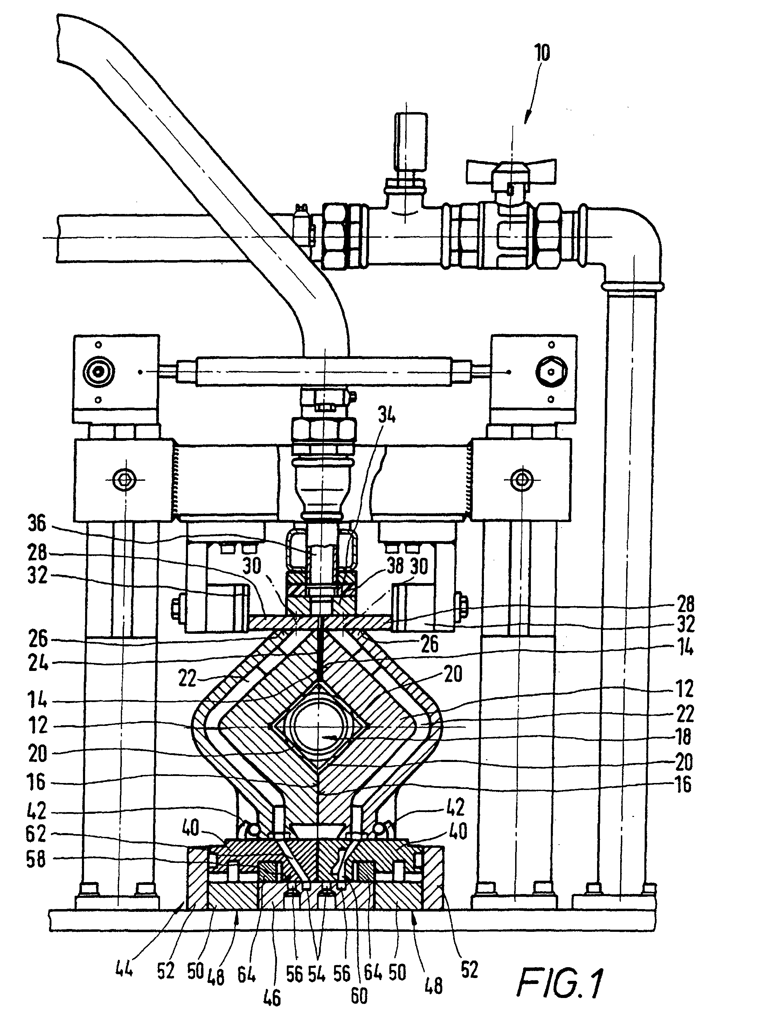

Fig. 1 zeigt in einer Vorderansicht und teilweise geschnitten eine Ausbildung der Vorrichtung 10 zum Herstellen von Querrippen-Rohren mit Formbackenhälften 12, die entlang der in Fig. 1 gezeichneten gemeinsamen Formstrecke mit ihren ersten Stirnflächen 14 und mit ihren zweiten Stirnflächen 16, die jeweils eine gemeinsame vertikale Ebene aufspannen, aneinander anliegen. Zwischen den ersten und den zweiten Stirnflächen 14 und 16 bilden die Formbackenhälften 12 entlang der gemeinsamen Formstrecke einen Formkanal 18. Jede Formbackenhälfte 12 ist mit Vakuumkanälen 20 ausgebildet, die strömungstechnisch mit dem Formkanal 18 verbunden sind, d.h. die in den Formkanal 18 einmünden.

Die Formbackenhälften 12 sind außerdem jeweils mit einem Kühlkanal 22 ausgebildet.

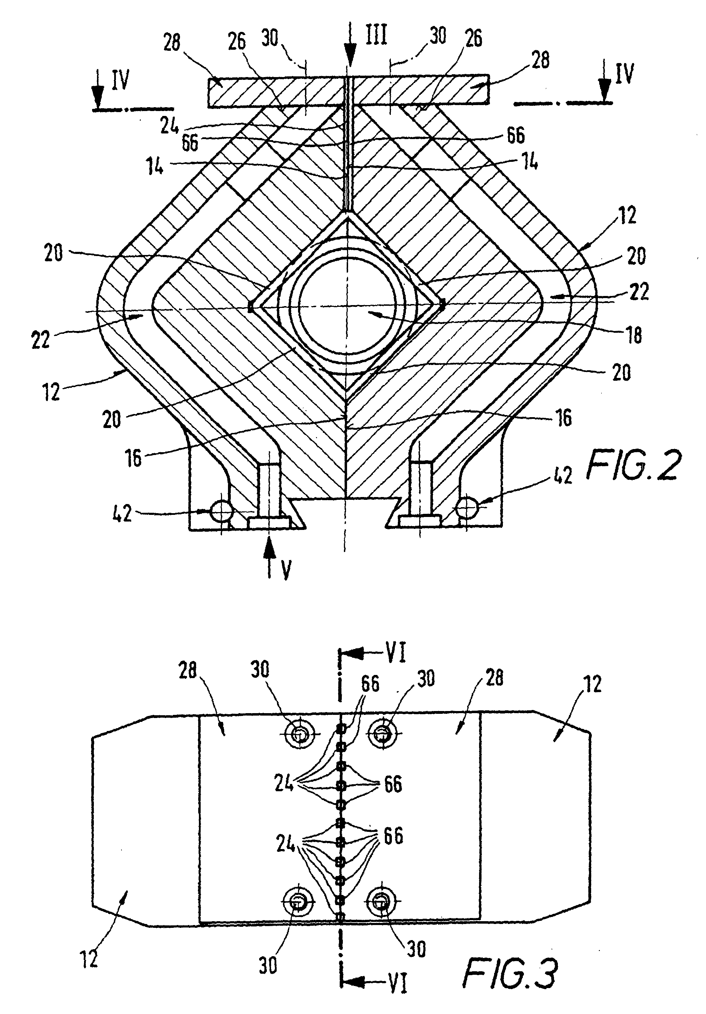

Wie auch aus den Figuren 2, 3 und 6 ersichtlich ist, sind die ersten Stirnflächen 14 der Formbackenhälften 12 mit Vakuumverbindungskanälen 24 ausgebildet, die an einer ersten Fläche 26 der Formbackenhälften 12 ausmünden. An der ersten Fläche 26 jeder Formbackenhälfte 12 ist ein Führungs- und Gleitelement 28 fixiert. Diese Fixierung erfolgt bspw. mittels Schrauben, deren Mittellinien in den Figuren 1 und 2 durch dünne strichpunktierte Linien 30 verdeutlicht sind. Die Führungs- und Gleitelemente 28 dienen nicht nur zur linearen Führung der Formbackenhälften 12 entlang von ortsfesten Führungsorganen 32, sondern außerdem auch zur Abdichtung der Kühlkanäle 28 an der Oberseite bzw. an der ersten Fläche 26 der Formbackenhälften 12.

Mittig zwischen den Führungsorganen 32 ist entlang der gemeinsamen Formstrecke der Vorrichtung 10 eine Vakuumleiste 34 ortsfest vorgesehen. Die Vakuumleiste 34 ist an einem ortsfesten Vakuumkopf 36 elastisch nachgiebig befestigt. Die elastische Nachgiebigkeit wird mittels eines Distanzelementes 38 erzielt. Dieses Distanzelement 38 besteht bspw. aus einem Silikonschaumgummi. Es dient außerdem zum mechanischen Höhentoleranzausgleich und zur Kompensation von Wärmedehnungen der Formbackenhälften 12. Die Vakuumleiste 34 kann aus einem geeigneten Kunststoffmaterial bestehen. Entlang der gemeinsamen Formstrecke münden die an den ersten Stirnflächen 14 der Formbackenhälften 12 vorgesehenen Vakuumverbindungskanäle 24 in die Vakuumleiste 34 ein, wodurch zwischen einer (nicht dargestellten) Vakuumquelle und den Vakuumkanälen 20 bzw. dem Formkanal 18 entlang der gemeinsamen Formstrecke der Formbackenhälften 12 die strömungstechnische Verbindung gewährleistet ist.

An der von der ersten Fläche 26 abgewandten Unterseite jeder Formbackenhälfte 12 ist ein Trägerelement 40 vorgesehen, wobei das jeweilige Trägerelement 40 mit der zugehörigen Formbackenhälfte 12 mittels einer Schnellspanneinrichtung 42 verbindbar bzw. fest verbunden ist. Die Trägerelemente 40 und die Führungs- und Gleitelemente 28 bestehen aus dem gleichen Material, bspw. aus Edelstahl. Die Formbackenhälften 12 sind mittels der zugehörigen Trägerelemente 40 entlang einer zur Vakuumleiste 34 parallelen Kühlmediumleiste 44 linear geführt. Die unterseitige Kühlmediumleiste 44 weist einen zentralen Kühlmedium-Umlaufabschnitt 46 und zwei seitliche, daran anschließende ölgeschmierte Führungsabschnitte 48 auf. Jeder der beiden ölgeschmierten Führungsabschnitte 48 weist eine Horizontalleiste 50 und eine daran seitlich anschließende Vertikalleiste 52 auf. Der zentrale Kühlmedium-Umlaufabschnitt besteht aus einer Gleitmetallegierung, bspw. aus Bronze. Er weist zwei Kühlmedium-Ablaufrinnen 54 und zwei Kühlmedium-Zulaufrinnen 56 auf, die entlang der gemeinsamen Formstrecke der Vorrichtung 10 ausgebildet sind.

Durch die an der Unterseite der Formbackenhälften 12 vorgesehenen Trägerelemente 40 wird eine zur oberseitigen ersten Fläche 26 parallele zweite Fläche 58 festgelegt, wobei die zweite Fläche 58 jedes Trägerelementes 40 einen Kühlmediumzulauf 60 und einen Kühlmediumablauf 62 aufweist, die entlang der gemeinsamen Formstrecke mit den zugehörigen Kühlmedium-Zulaufrinnen 56 und Kühlmedium-Ablaufrinnen 54 verbunden sind, so daß das Kühlmedium die Kühlkanäle 22 durchströmen kann, um die entlang der gemeinsamen Formstrecke vorgesehenen Formbackenhälften 12 zu kühlen.

Um zwischen den beiden seitlichen ölgeschmierten Führungsabschnitten 48 der unterseitigen Kühlmediumleiste 44 und deren zentralem Kühlmedium-Umlaufabschnitt 46 eine zuverlässige Schmieröl-Barriere zu bewirken, sind entlang der gemeinsamen Formstrecke Sperrleisten 64 vorgesehen.

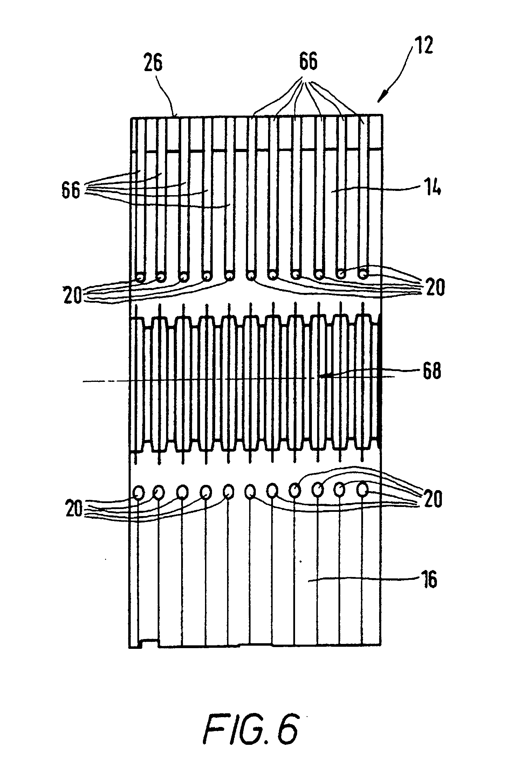

Wie aus Fig. 2 und insbes. aus Fig. 3 deutlich ersichtlich ist, sind die Vakuumverbindungskanäle 24 durch Rillen 66 festgelegt, die an den ersten Stirnflächen 14 der Formbackenhälften 12 ausgebildet sind, und die sich durch die an den Formbackenhälften 12 oberseitig fixierten Führungs- und Gleitelemente 28 hindurcherstrecken. Die mit den Vakuumkanälen 20 kommunizierenden Rillen 66 an der ersten Stirnfläche 14 jeder Formbackenhälfte 12 sind auch aus Fig. 6 deutlich ersichtlich. Die Fig. 6 zeigt außerdem die entsprechende Hälfte 68 des Formkanals der jeweiligen Formbackenhälfte 12 mit der gewellten bzw. gerippten Oberflächenstruktur, wodurch entlang der gemeinsamen Formstrecke der Formbackenhälften dann die Außenkontur der herzsutellenden Querrippen-Rohre bestimmt ist.

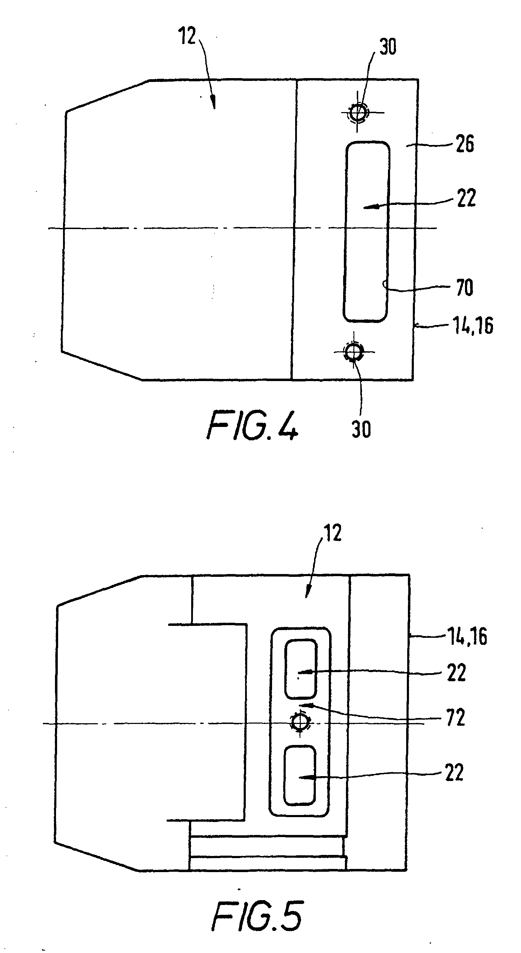

Fig. 4 zeigt in einer Ansicht von oben eine Formbackenhälfte 12, wobei die erste Fläche 26 mit einem Loch 70 ersichtlich ist, das durch den Kühlkanal 22 bestimmt ist. Dieses Loch 70 an der ersten Fläche 26 wird dann durch das zugehörige Führungs- und Gleitelement 28 (sh. Fig. 1 und 2) dicht verschlossen.

Fig. 5 zeigt eine Formbackenhälfte 12 in Blickrichtung von unten zur Verdeutlichung des durch einen Mittelsteg 72 zweigeteilten Kühlkanales 22, wobei der eine Schenkel des Kühlkanales 22 mit dem Kühlmediumzulauf 60 und der andere Schenkel des Kühlkanales 22 mit dem Kühlmediumablauf 62 des zugehörigen Trägerelementes 40 fluidisch verbunden ist.

Gleiche Einzelheiten sind in den Figuren 1 bis 6 jeweils mit denselben Bezugsziffern bezeichnet.

## Patentansprüche

1. Vorrichtung zum Herstellen von Querrippen-Rohren, welche Formbackenhälften (12) aufweist, die entlang einer gemeinsamen Formstrecke mit ersten und zweiten Stirnflächen (14, 16) aneinander anliegen und dazwischen einen Formkanal (18) bilden, wobei jede Formbackenhälfte (12) mit dem Formkanal (18) strömungstechnisch verbundene Vakuumkanäle (20) und einen Kühlkanal (22) aufweist, wobei die ersten Stirnflächen (14) der Formbackenhälften (12) mit Vakuumverbindungsrillen (66) ausgebildet sind, die an einer ersten Fläche (26) der Formbackenhälften (12) ausmünden, wobei an der Formstrecke eine ortsfeste Vakuumleiste (34) vorgesehen ist, die mit den die Vakuumkanäle (20) bildenden Vakuumverbindungsrillen (66) der jeweiligen, an der Formstrecke befindlichen Formbackenhälften (12) strömungstechnisch verbunden sind, und wobei an der Formstrecke eine ortsfeste Kühlmediumleiste (44) vorgesehen ist, die mit dem Kühlmediumzulauf (60) und dem Kühlmediumablauf (62) der jeweiligen, an der Formstrecke befindlichen Formbackenhälften (12) fluidisch verbunden ist,
**dadurch gekennzeichnet,**
**daß** der Kühlkanal (22) der jeweiligen Formbackenhälfte (12) an einer von der ersten Fläche (26) verschiedenen zweiten Fläche (58) einen Kühlmediumzulauf (60) und einen Kühlmediumablauf (62) aufweist, wobei die erste Fläche (26) und die zweite Fläche (58) einander gegenüberliegen und zueinander parallel vorgesehen sind, daß an der ersten Fläche (26) jeder Formbackenhälfte (12) ein Führungs- und Gleitelement (28) fixiert ist, und daß jede Formbackenhälfte (12) mit einem die zweite Fläche (58) festlegenden Trägerelement (40) verbunden ist, das entlang der Formstrecke an der Kühlmediumleiste (44) geführt ist, wobei das Führungs- und Gleitelement (28) und das Trägerelement (40) der jeweiligen Formbackenhälfte (12) aus dem gleichen Material besteht.

2. Vorrichtung nach Anspruch 1,
**dadurch gekennzeichnet,**
**daß** die Formbackenhälften (12) aus einem Material bestehen, das im Vergleich zum Material für die Führungs- und Gleitelemente (28) einen hohen Wärmeleitungskoeffizienten aufweist.

3. Vorrichtung nach Anspruch 1,
**dadurch gekennzeichnet,**
**daß** die Formbackenhälften (12) mittels Schnellspanneinrichtungen (42) mit den zugehörigen Trägerelementen (40) verbindbar sind.

4. Vorrichtung nach Anspruch 1,
**dadurch gekennzeichnet,**
**daß** die Vakuumleiste (34) an einem ortsfesten Vakuumkopf (36) elastisch nachgiebig angebracht ist.

5. Vorrichtung nach Anspruch 1,
**dadurch gekennzeichnet,**
**daß** die Kühlmediumleiste (44) einen zentralen Kühlmedium-Umlaufabschnitt (46) und seitlich daran anschließende ölgeschmierte Führungsabschnitte (48) aufweist.

6. Vorrichtung nach Anspruch 5,
**dadurch gekennzeichnet,**
**daß** die ölgeschmierten Führungsabschnitte (48) aus einem Metall bestehen, dessen Abriebfestigkeit größer ist als die des zentralen Kühlmedium-Umlaufabschnittes (46), und daß der zentrale Kühlmedium-Umlaufabschnitt (46) aus einer Gleitmetallegierung besteht.

## Claims

1. Apparatus for the production of transverse-rib tubes, which has moulding-jaw halves (12) which come to bear with first and second end faces (14, 16) one against the other along a common moulding zone and between them form a moulding duct (18), each moulding-jaw half (12) having vacuum ducts (20) flow-connected to the moulding duct (18) and having a cooling duct (22), the first end faces (14) of the moulding-jaw halves (12) being formed with vacuum connecting grooves (66) which issue on a first face (26) of the moulding-jaw halves (12), the moulding zone having provided on it a fixed vacuum strip (34) which is flow-connected to the vacuum connecting grooves (66), forming the vacuum ducts (20), of the respective moulding-jaw halves (12) located on the moulding zone, and the moulding zone having provided on it a fixed cooling-medium strip (44) which is fluidically connected to the cooling-medium inflow (60) and the cooling-medium outflow (62) of the respective moulding-jaw halves (12) located on the moulding zone, **characterized in that** the cooling duct (22) of the respective moulding-jaw half (12) has a cooling-medium inflow (60) and a cooling-medium outflow (62) on a second face (58) different from the first face (26), the first face (26) and the second face (58) being located opposite one another and being provided parallel to one another, **in that** a guiding and sliding element (28) is fixed to the first face (26) of each moulding-jaw half (12), and **in that** each moulding-jaw half (12) is connected to a carrier element (40) which defines the second face (58) and which is guided along the moulding zone on the cooling-medium strip (44), the guiding and sliding element (28) and the carrier element (40) of the respective moulding-jaw half (12) consisting of the same material.

2. Apparatus according to Claim 1, **characterized in that** the moulding-jaw halves (12) consist of a material which has a high coefficient of thermal conduction, as compared with the material for the guiding and sliding elements (28).

3. Apparatus according to Claim 1, **characterized in that** the moulding-jaw halves (12) are connectable to the associated carrier elements (40) by means of quick-action clamping devices (42).

4. Apparatus according to Claim 1, **characterized in that** the vacuum strip (34) is mounted on a fixed vacuum head (36) in an elastically flexible manner.

5. Apparatus according to Claim 1, **characterized in that** the cooling-medium strip (44) has a central cooling-medium circulation portion (46) and oil-lubricated guiding portions (48) laterally adjoining the latter.

6. Apparatus according to Claim 5, **characterized in that** the oil-lubricated guiding portions (48) consist of a metal, the abrasion resistance of which is higher than that of the central cooling-medium circulation portion (46), and **in that** the central cooling-medium circulation portion (46) consists of a sliding-metal alloy.

## Revendications

1. Dispositif pour la fabrication de tubes à nervures transversales, du type qui se compose de demi-mâchoires de moule (12) qui sont appliquées l'une contre l'autre par une première et une seconde surfaces frontales (14, 16) le long d'un trajet de moulage commun et qui forme entre elles un canal de moulage (18), dispositif dans lequel chaque demi-mâchoire de moule (12) forme avec le canal de moulage (18) des canaux sous vide (20) et un canal de refroidissement (22) réunis fluidiquement, dans lequel, dans les premières surfaces frontales (14) des demi-mâchoires de moule (12) sont pratiquées des rainures de branchement sur le vide (66) qui débouchent sur une première surface (26) des demi-mâchoires de moule (12), dans lequel, sur le trajet de moulage est prévue une rampe sous vide (34) fixe en position, qui, avec les rainures de branchement sur le vide (66) qui créent les canaux sous vide (20), sont réunies fluidiquement avec chacune des demi-mâchoires de moule (12) se trouvant sur le trajet de moulage, et dans lequel il est prévu, sur le trajet de moulage, une rampe d'agent de refroidissement (44) fixe en position et qui est reliée fluidiquement à l'amenée d'agent de refroidissement (60) et à l'évacuation d'agent de refroidissement (62) de chacune des demi-mâchoires de moule (12) se trouvant sur le trajet de moulage,
**caractérisé en ce que** le canal de refroidissement (22) de chacune des demi-mâchoires de moule (12) présente, sur l'une des secondes surfaces (58) différant des premières surfaces (26), une amenée d'agent de refroidissement (60) et une évacuation d'agent de refroidissement (62) , la première surface (26) et la seconde surface (58) étant prévues appliquées l'une contre l'autre et parallèles entre elles, **en ce que**, sur la première surface (26) de chaque demi-mâchoire de moule (12) est fixé un élément de guidage et de coulissement (28) et **en ce que** chaque demi-mâchoire de moule (12) est reliée à un élément de support (40) solidaire de la seconde surface (58), et qui est guidé le long du trajet de moulage par la rampe d'agent de refroidissement (44), l'élément de guidage et de coulissement (28) et l'élément de support (40) de chaque demi-mâchoire de moule (12) étant réalisée dans la même matière.

2. Dispositif selon la revendication 1, **caractérisé en ce que** les demi-mâchoires de moule (12) sont réalisées en une matière qui, par comparaison avec la matière utilisée pour les éléments de guidage et de coulissement (28) présente un coefficient de conductibilité thermique élevée.

3. Dispositif selon la revendication 1, **caractérisé en ce que** les demi-mâchoires de moule (12) peuvent être réunies au moyen de systèmes de mise sous tension rapide (42) avec l'élément de support correspondant (40).

4. Dispositif selon la revendication 1, **caractérisé en ce que** la rampe sous vide (34) est fixée à une tête sous vide (36) fixe en position de manière souple et élastique.

5. Dispositif selon la revendication 1, **caractérisé en ce que** la rampe d'agent de refroidissement (44) comporte une section centrale de circulation d'agent de refroidissement (46) et, fixée latéralement à celle-ci, une section de guidage (48) lubrifiée à l'huile.

6. Dispositif selon la revendication 5, **caractérisé en ce que** la section de guidage lubrifiée à l'huile (48) est réalisée en une matière dont le coefficient de frottement est supérieur à celui de la section centrale de circulation d'agent de refroidissement (46) et **en ce que** la section centrale de circulation d'agent de refroidissement (46) est réalisée en un alliage métallique glissant.
